(19) Europäisches Patentamt / European Patent Office / Office européen des brevets

(11) EP 3 249 297 A1

(12) EUROPEAN PATENT APPLICATION
published in accordance with Art. 153(4) EPC

(43) Date of publication:
29.11.2017 Bulletin 2017/48

(21) Application number: 15878947.9

(22) Date of filing: 18.12.2015

(51) Int Cl.:
F23J 7/00 (2006.01)          F23J 1/00 (2006.01)
F23J 15/00 (2006.01)         B01D 53/56 (2006.01)
B01D 53/86 (2006.01)         B09B 3/00 (2006.01)
F23G 5/24 (2006.01)

(86) International application number:
PCT/JP2015/085507

(87) International publication number:
WO 2016/117258 (28.07.2016 Gazette 2016/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 19.01.2015 JP 2015008016

(71) Applicant: Kobelco Eco-Solutions Co., Ltd
Kobe-shi, Hyogo 651-0072 (JP)

(72) Inventors:
• MINAKAWA, Koji
Kobe-shi
Hyogo 651-2241 (JP)
• SUNADA, Hiroshi
Kobe-shi
Hyogo 651-0086 (JP)
• HOSODA, Hiroyuki
Kobe-shi
Hyogo 651-2241 (JP)

(74) Representative: Müller-Boré & Partner
Patentanwälte PartG mbB
Friedenheimer Brücke 21
80639 München (DE)

(54) **WASTE TREATMENT SYSTEM AND NOX TREATMENT METHOD USED THEREIN**

(57) A waste treatment system is provided with a melting furnace (200) for melting ash that is included in combustible gas, a denitrification agent supply unit (300) for supplying a denitrification agent that reduces NOx, and a control unit (400) for controlling the amount of the denitrification agent that is supplied. The melting furnace (200) includes a primary combustion chamber (210) having an inlet port and a secondary combustion chamber (220). The control unit (400) calculates an estimation value of concentration of NOx produced in the melting furnace (200) based on the temperature in a correlation region (S) at or near the inlet port of the primary combustion chamber (210) and an air ratio, where the correlation between the temperature and NOx concentration in the correlation region (S) is stronger than that in the secondary combustion chamber (220). The control unit (400) controls the amount of the denitrification agent to be supplied by the denitrification agent supply unit (300) based on the estimation value.

FIG.1

EP 3 249 297 A1

## Description

## Technical Field

The present invention relates to a waste treatment system for treating waste and a method of treating NOx in the system.

## Background Art

A waste treatment system including a gasification furnace that produces combustible gas from waste and a melting furnace that melts ash contained in the combustible gas has been known. Such a waste treatment system generally emits NOx by burning combustible gas in the melting furnace and is required to keep the concentration of NOx emitted into the atmospheric air within a certain level. For this reason, a denitrification agent (reducing agent) such as ammonia is usually supplied to the exhaust gas in the melting furnace or the exhaust gas exhausted from the melting furnace.

For example, Patent Literature 1 discloses a waste treatment system including a gasification furnace, a melting furnace, and a denitrification catalyst device. The melting furnace includes a primary combustion chamber having an inlet port, which allows combustible gas produced in the gasification furnace to flow through, and configured to burn the combustible gas, and a secondary combustion chamber connected to the downstream of the primary combustion chamber and configured to further burn the exhaust gas produced in the primary combustion chamber. The denitrification catalyst device is disposed in the downstream of the melting furnace. In the denitrification catalyst device, the denitrification agent is supplied to the exhaust gas exhausted from the melting furnace to treat NOx contained in the exhaust gas.

The waste treatment system disclosed in Patent Literature 1 also includes a control unit that controls the amount of the denitrification agent to be supplied by a denitrification agent supplying device. The control unit calculates the estimation value of NOx concentration in the exhaust gas exhausted from the secondary combustion chamber of the melting furnace based on the temperature and oxygen concentration in the secondary combustion chamber. Based on the estimation value, the control unit performs a feedforward control on the amount of the denitrification agent to be supplied by the denitrification agent supplying device. As compared to directly measuring the NOx concentration in the exhaust gas exhausted from the secondary combustion chamber using a NOx concentration meter, estimating the NOx concentration based on the temperature and oxygen concentration (air ratio) in the secondary combustion chamber requires no additional NOx meter because the control can be performed using the thermometer and the 02 meter already installed in the device. The waste treatment system disclosed in Patent Literature 1 performs control based on the estimation value instead of a value measured by the NOx concentration meter.

In the waste treatment system disclosed in Patent Literature 1, NOx concentration is preferably estimated with as high accuracy as possible to keep consumption of the denitrification agent low. There is however a limit in raising the accuracy of estimating the NOx concentration in the waste treatment system. In other words, there is a limit in reducing consumption of the denitrification agent.

## Citation List

## Patent Literature

Patent Literature 1: JP 2006-192406 A

## Summary of Invention

An object of the present invention is to provide a waste treatment system that can reduce a supply amount of a denitrification agent by raising accuracy of estimating NOx concentration in a melting furnace and a method of treating NOx in the system.

As a result of efforts to solve the aforementioned problem, the present inventors have found out that, in a melting furnace including a primary combustion chamber and a secondary combustion chamber as in a waste treatment system disclosed in Patent Literature 1, a correlation between temperature and NOx concentration in a region near the inlet port of the primary combustion chamber is stronger than a correlation between temperature and NOx concentration in the secondary combustion chamber. Specifically, while the NOx concentration gradually decreases as the temperature in the region near the inlet port rises, the change in the temperature in the secondary combustion chamber does not cause much change in the NOx concentration. This may be reasoned as follows. Since nitrogen compounds, such as ammonia, are contained in the gas flowing from the gasification furnace through the inlet port into the primary combustion chamber, the reaction between the nitrogen compounds and NOx (reductive reaction of NOx) is promoted as the temperature in the region near the inlet port rises. In contrast, in the secondary combustion chamber, where there is less amount of nitrogen compounds, the reductive reaction of NOx is not promoted so much. An idea is thus obtained that estimating the NOx concentration based on the temperature and the air ratio in the region near the inlet port of the primary combustion chamber can provide improved estimation accuracy.

The present invention has been made in view of such circumstances. A waste treatment system for treating waste according to one aspect of the present invention includes a melting furnace for burning combustible gas produced in a gasification furnace to melt ash contained in the combustible gas, a denitrification agent supply unit that supplies a denitrification agent for reducing NOx contained in exhaust gas resulting from burning the combustible gas, and a control unit that controls an amount of the denitrification agent to be supplied by the denitrification agent supply unit, wherein the melting furnace includes a primary combustion chamber having an inlet port, which allows the combustible gas to flow through, and configured to burn combustible gas flown in through the inlet port, and a secondary combustion chamber connected to a downstream of the primary combustion chamber and configured to further burn exhaust gas resulting from burning in the primary combustion chamber, and the control unit calculates an estimation value of concentration of NOx produced in the melting furnace based on temperature and air ratio in a correlation region at or near the inlet port of the primary combustion chamber, a correlation between temperature and NOx concentration in the correlation region being stronger than a correlation between temperature and NOx concentration in the secondary combustion chamber, and controls an amount of the denitrification agent to be supplied by the denitrification agent supply unit based on the estimation value.

A method of treating NOx in a waste treatment system according to one aspect of the present invention is for treating NOx contained in exhaust gas produced in the waste treatment system for treating waste. The method includes a melting step of burning combustible gas produced in a gasification furnace in a melting furnace to melt ash contained in the combustible gas, and a denitrification agent supplying step of supplying a denitrification agent for reducing NOx contained in exhaust gas produced in the melting step, wherein in the melting step, the ash is melted in the melting furnace including a primary combustion chamber having an inlet port, which allows the combustible gas to flow through, and configured to burn combustible gas flown in through the inlet port, and a secondary combustion chamber connected to a downstream of the primary combustion chamber and configured to further burn exhaust gas resulting from burning in the primary combustion chamber, and in the denitrification agent supplying step, an estimation value of concentration of NOx produced in the melting furnace is calculated based on temperature and air ratio in a correlation region at or near the inlet port of the primary combustion chamber, a correlation between temperature and NOx concentration in the correlation region being stronger than a correlation between temperature and NOx concentration in the secondary combustion chamber, and the denitrification agent is supplied to the exhaust gas by an amount adjusted based on the estimation value.

## Brief Description of Drawings

FIG. 1 schematically illustrates a waste treatment system according to an embodiment of the present invention.
FIG. 2 is an enlarged view of a primary combustion chamber of a melting furnace illustrated in FIG. 1.
FIG. 3 is a chart illustrating relationship between temperature and NOx concentration in a correlation region.
FIG. 4 is a chart illustrating an example of temperature change in the primary combustion chamber.
FIG. 5 is a chart illustrating relationship of air ratio, temperature, and NOx concentration ratio.

## Description of Embodiment

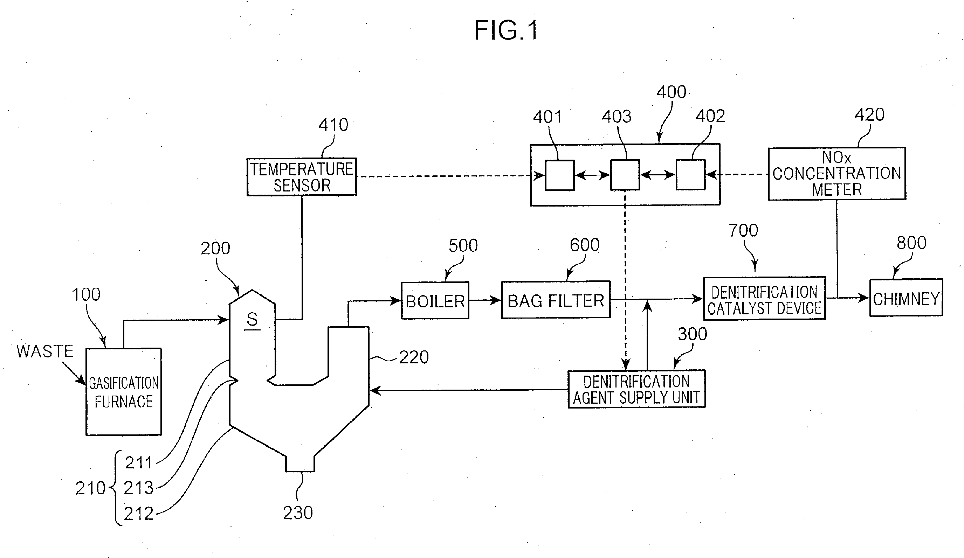

A waste treatment system according to an embodiment of the present invention will now be described with reference to FIGS. 1 to 5.

As illustrated in FIG. 1, a waste treatment system according to the present embodiment includes a gasification furnace 100, a melting furnace 200, a denitrification agent supply unit 300, a control unit 400, a temperature sensor 410, a NOx concentration meter 420, a boiler 500, a bag filter 600, a denitrification catalyst device 700, and a chimney 800.

The gasification furnace 100 is a furnace for heating waste to take out combustible gas from the waste. A fluid bed gasification furnace is used in the present embodiment as the gasification furnace 100. Specifically, the fluid bed gasification furnace is for heating waste in a fluid bed formed of a fluid medium fluidized by fluidizing gas to take out combustible gas from the waste.

The melting furnace 200 is for burning combustible gas produced in the gasification furnace 100 to melt ash contained in the combustible gas. A swirl flow melting furnace is used in the present embodiment as the melting furnace 200. The melting furnace 200 includes a primary combustion chamber 210 and a secondary combustion chamber 220. Primary air for burning the combustible gas is supplied to the primary combustion chamber 210, and secondary air for further burning the exhaust gas produced in the primary combustion chamber 210 is supplied to the secondary combustion chamber 220. A cinder notch 230 is provided between the primary combustion chamber 210 and the secondary combustion chamber 220 to eject downward molten slag formed by melting the ash.

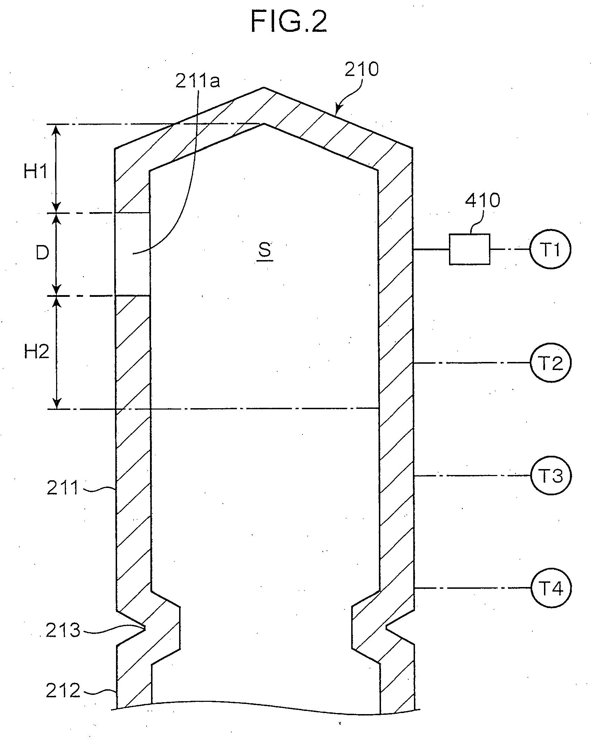

The primary combustion chamber 210 has an inlet port 211 a (see FIG. 2) that allows combustible gas to flow through. The combustible gas flown in through the inlet port 211 a swirls and burns in the primary combustion chamber 210. The inlet port 211a has a square shape. The inlet port 211a may have other shapes, such as a circular shape, an oval shape, and a polygon shape. The primary combustion chamber 210 has a shape extending in the vertical direction. As illustrated in FIG. 2, the primary combustion chamber 210 includes an upstream combustion chamber 211 that has a cylindrical shape and has the inlet port 211 a, a downstream combustion chamber 212 provided below the upstream combustion chamber 211, and a narrow section 213 that is provided at the boundary between the upstream combustion chamber 211 and the downstream combustion chamber 212 and has an inner diameter smaller than that of the bottom end of the upstream combustion chamber 211. The inlet port 211 a is provided in the upper part of the upstream combustion chamber 211. The downstream combustion chamber 212 has a bottom wall extending diagonally downward from below the narrow section 213. The molten slag flows down along the bottom wall and is ejected from the cinder notch 230.

In the secondary combustion chamber 220, the exhaust gas resulting from burning in the primary combustion chamber is further burned. The secondary combustion chamber 220 is disposed in the opposite side (in the downstream) of the primary combustion chamber 210 with respect to the cinder notch 230. The secondary combustion chamber 220 surrounds the space extending diagonally upward from the cinder notch 230.

The boiler 500 recovers heat from the exhaust gas exhausted from the secondary combustion chamber 220 to produce steam. The exhaust gas exhausted from the boiler 500 is treated as appropriate in the bag filter 600, denitrified in the denitrification catalyst device 700, and then emitted into the atmospheric air through the chimney 800.

The denitrification agent supply unit 300 supplies a denitrification agent (e.g., ammonia) to the exhaust gas resulting from burning the combustible gas in the melting furnace 200 to reduce NOx contained in the exhaust gas. In the present embodiment, the denitrification agent supply unit 300 supplies the denitrification agent to the secondary combustion chamber 220 and a pipe connecting the bag filter 600 and the denitrification catalyst device 700. The denitrification catalyst device 700 may be omitted, and the denitrification agent supply unit 300 may supply the denitrification agent only to the secondary combustion chamber 220 or only to the pipe connected to the bag filter 600.

The temperature sensor 410 detects the temperature in the region at the same height as the center of the inlet port 211 a in the upstream combustion chamber 211. In the present embodiment, the temperature sensor 410 is provided in the upstream combustion chamber 211 at the same height as the center of the inlet port 211a. A radiation thermometer may be used as the temperature sensor 410.

The NOx concentration meter 420 measures NOx concentration in the exhaust gas. The NOx concentration meter 420 is provided between the denitrification catalyst device 700 and the chimney 800. The NOx concentration meter 420 may be provided in the chimney 800.

The control unit 400 includes a processing unit 401, a concentration receiving unit 402, and a determining unit 403.

The processing unit 401 calculates an estimation value of the concentration of NOx produced in the melting furnace 200 based on the value detected by the temperature sensor 410 (the temperature in the region at the same height as the center of the inlet port 211 a in the upstream combustion chamber 211) and the air ratio in the region at or near the inlet port 211a. Specifically, the function as expressed by an equation (1) listed below is used to calculate the estimation value.

$$f(x, y) = ax + by + c \qquad (1)$$

In the equation (1), "f" is the estimation value of the NOx concentration, "x" is the value detected by the temperature sensor 410, namely, the temperature in the region at the same height as the center of the inlet port 211 a in the upstream combustion chamber 211, and "y" is the air ratio in the region at or near the inlet port 211a. Here, "a" and "b" are coefficients and "c" is a constant term. The air ratio is calculated based on the amount of air supplied to the gasification furnace 100, the amount of the primary air supplied to the primary combustion chamber 210, and the value detected by an oxygen concentration meter capable of detecting the oxygen concentration in the region at or near the inlet port 211a.

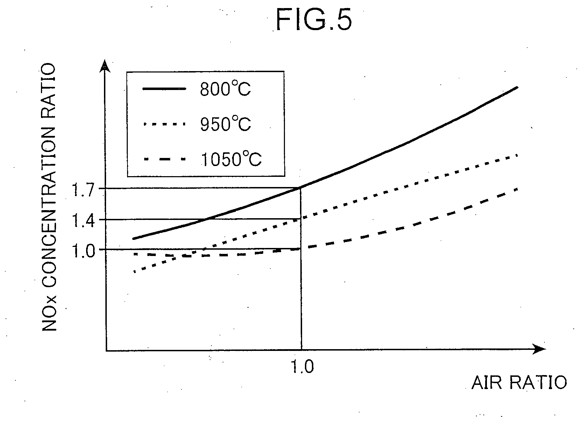

The equation (1) is derived by performing multiple regression analysis on the data shown in FIG. 5. FIG. 5 illustrates the relationship between the air ratio and the NOx concentration ratio for 800°C, 950°C, and 1050°C. The NOx concentration ratio represents a value where NOx concentration is 1.0 under the condition where the value detected by the temperature sensor 410 is 1050°C and the air ratio is 1.0. The NOx concentration is measured by a NOx concentration meter (not shown) provided temporarily (on a trial basis) on the pipe connecting the bag filter 600 and the denitrification catalyst device 700 in the upstream of the portion where the denitrification agent is supplied. As illustrated in FIG. 5, under a constant temperature, the NOx concentration gradually rises as the air ratio increases, and under a constant air ratio, the NOx concentration gradually decreases as the temperature rises. That is, the NOx concentration can be calculated based on the temperature and the air ratio.

The concentration receiving unit 402 receives the value measured by the NOx concentration meter 420.

The determining unit 403 determines the amount of the denitrification agent to be supplied by the denitrification agent supply unit 300 based on the estimation value calculated by the processing unit 401 and the value measured by the NOx concentration meter 420 which has been received by the concentration receiving unit 402. That is, in the present embodiment, the determining unit 403 performs a combined control of a feedforward control based on the estimation value and a feedback control based on the measured value. For example, the determining unit 403 adds together the value obtained by multiplying by 0.7 the amount of supplied denitrification agent calculated based on the estimation value and the value obtained by multiplying by 0.3 the amount of supplied denitrification agent calculated based on the measured value. The amount of denitrification agent to be supplied by the denitrification agent supply unit 300 is thereby determined. That is, the denitrification agent supply unit 300 supplies the denitrification agent by the amount based on the signal (signal indicating the amount of the denitrification agent to be supplied) received from the determining unit 403.

During operation of the waste treatment system described above, the combustible gas produced in the gasification furnace 100 flows into the primary combustion chamber 210 through the inlet port 211a and burns in the primary combustion chamber 210. NOx is thereby produced. In the present embodiment, a correlation region S in which the correlation between temperature and NOx concentration is relatively strong is formed at or near the inlet port 211 a of the primary combustion chamber 210. In the correlation region S, the correlation between the temperature and the NOx concentration is relatively stronger than other regions in the melting furnace 200 (the region below the correlation region S in the primary combustion chamber 210, and the secondary combustion chamber 220).

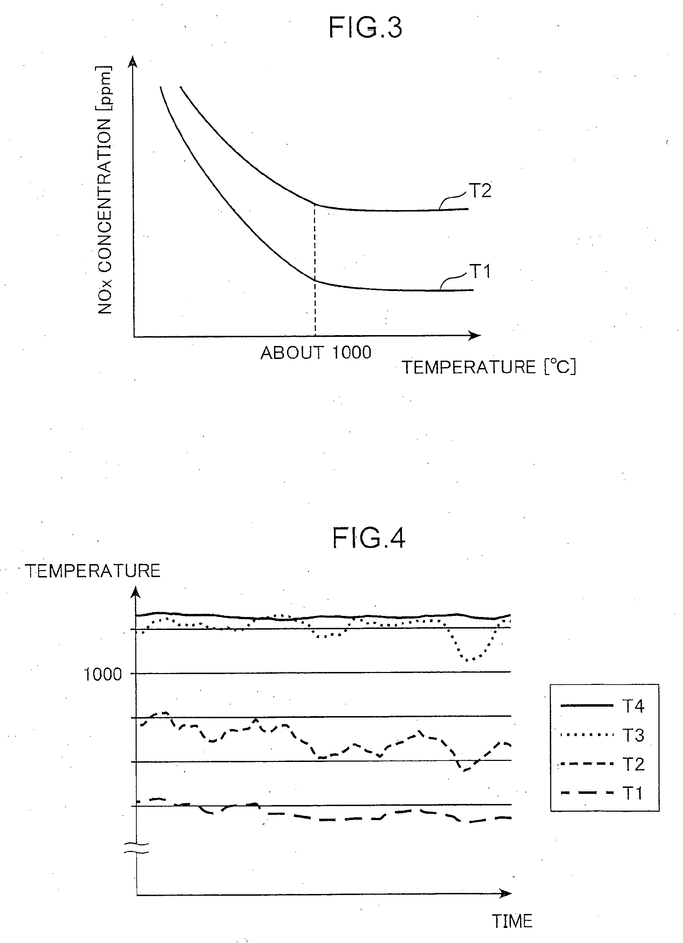

FIG. 3 illustrates the relationship between the temperature in the correlation region S and the concentration of NOx produced in the melting furnace 200. T1 in FIG. 3 is a value detected by the temperature sensor 410, and T2 in FIG. 3 is the value detected by the temperature sensor 410 when the temperature sensor 410 is set at T2 in FIG. 2 (located below T1). As illustrated in FIG. 3, in the correlation region S, NOx concentration gradually decreases as the temperature rises. This may be reasoned as follows. Since nitrogen compounds are contained in the gas flowing from the gasification furnace 100 through the inlet port 211a into the primary combustion chamber 210, the reaction between the nitrogen compounds and NOx (reductive reaction of NOx) is promoted as the temperature in the region near the inlet port 211 a (the correlation region S) increases. However, in a range where the temperature is above 1000°C, the correlation between the temperature and the NOx concentration is very low. As illustrated in FIG. 4, the temperature at T3 in FIG. 2 (located below T2) and the temperature at T4 (located below T3) usually stay within a range above 1000°C, so that each correlation at T3 and T4 in the upstream combustion chamber 211 is not so strong. As illustrated in FIG. 2 in the present embodiment, the space extending from a position above the top end of the inlet port 211a by a first height H1 to a position below the bottom end of the inlet port 211 a by a second height H2 corresponds to the correlation region S. The first height H1 is 1.0 to 1.5 times a height D of the inlet port 211 a, and the second height H2 is 1.0 to 1.5 times the height D of the inlet port 211a.

Meanwhile, the correlation is not so strong also in the secondary combustion chamber 220. This may be reasoned as follows. The amount of nitrogen compounds in the secondary combustion chamber 220 is smaller than that in the primary combustion chamber 210 (particularly, in the correlation region S), so that reductive reaction of NOx is not promoted so much.

In the present embodiment, the processing unit 401 of the control unit 400 calculates the estimation value of NOx concentration based on the temperature and the air ratio in the correlation region S (the region at or near the inlet port 211a of the primary combustion chamber 210 where temperature usually stays within 1000°C). This calculation has higher accuracy in estimating NOx concentration than calculating the estimation of NOx concentration based on the temperature and the air ratio in a region in the melting furnace 200 where the correlation is weaker than that in the correlation region S (a region in the primary combustion chamber 210 below the correlation region S or the secondary combustion chamber 220). The amount of supplied denitrification agent is suitably adjusted and thereby consumption of the denitrification agent is reduced.

Furthermore, in the present embodiment, the determining unit 403 performs a combined control of the feedforward control based on the estimation value and the feedback control based on the measured value, so that consumption of the denitrification agent is less than that in the case of performing only the feedback control based on the measured value. Specifically, when only the feedback control based on the measured value is performed, a control delay in the feedback control causes an increase in the amount of supplied denitrification agent, but the feedforward control corrects the control delay in the feedback control, so that consumption of the denitrification agent is reduced.

It should be construed that the embodiment is described above totally by means of illustration, not by limitation. The scope of the present invention is determined by the scope of the claims, not by the description of the embodiment. Any modifications within the scope and the meanings equivalent to the claims all fall within the scope of the present invention.

For example, the processing unit 401 is not limited to a unit that calculates the estimation value of the NOx concentration based on the temperature and the air ratio at the same height as the center of the inlet port 211a in the primary combustion chamber 210 (at T1 in FIG. 2). The processing unit 401 can calculate the estimation value based on the temperature and the air ratio at any height in the correlation region S (for example, at a height indicated by T2 in FIG. 2). The processing unit 401 is not limited to a unit that calculates the estimation value based on the equation (1). For example, the processing unit 401 may determine the estimation value of the NOx concentration based on a map prepared in advance to indicate the relationship of the value detected by the temperature sensor 410 (the temperature at the same height as the center of the inlet port 211a in the primary combustion chamber 210) and the air ratio and the NOx concentration at the height of the temperature sensor 410.

The determining unit 403 may determine the amount of the denitrification agent to be supplied by the denitrification agent supply unit 300 based only on the estimation value calculated by the processing unit 401. In other words, the determining unit 403 may perform only the feedforward control based on the estimation value.

The melting furnace 200 is not limited to a furnace that has the cinder notch 230 between the primary combustion chamber 210 and the secondary combustion chamber 220, the secondary combustion chamber 220 being disposed in the opposite side of the primary combustion chamber 210 with respect to the cinder notch 230.

The above embodiment will now be briefly described.

The waste treatment system for treating waste according to the above embodiment includes a melting furnace for burning combustible gas produced in a gasification furnace to melt ash contained in the combustible gas, a denitrification agent supply unit that supplies a denitrification agent for reducing NOx contained in exhaust gas resulting from burning the combustible gas, and a control unit that controls an amount of the denitrification agent to be supplied by the denitrification agent supply unit, wherein the melting furnace includes a primary combustion chamber having an inlet port, which allows the combustible gas to flow through, and configured to burn combustible gas flown in through the inlet port, and a secondary combustion chamber connected to a downstream of the primary combustion chamber and configured to further burn exhaust gas resulting from burning in the primary combustion chamber, and the control unit calculates an estimation value of concentration of NOx produced in the melting furnace based on temperature and air ratio in a correlation region at or near the inlet port of the primary combustion chamber, a correlation between temperature and NOx concentration in the correlation region being stronger than that in the secondary combustion chamber, and controls an amount of the denitrification agent to be supplied by the denitrification agent supply unit based on the estimation value.

The waste treatment system estimates NOx concentration based on the temperature and the air ratio in the correlation region at or near the inlet port of the primary combustion chamber, the correlation between the temperature and the NOx concentration in the correlation region being stronger than that in the secondary combustion chamber, so that the accuracy of estimating NOx concentration is higher than estimating, in a conventional manner, NOx concentration based on the temperature and the air ratio in the secondary combustion chamber. Specifically, since nitrogen compounds contained in the gas flowing from the gasification furnace into the primary combustion chamber facilitates reductive reaction of NOx in the correlation region at or near the inlet port of the primary combustion chamber as the temperature rises, the NOx concentration decreases as the temperature rises in the correlation region. Meanwhile, since the amount of nitrogen compounds in the secondary combustion chamber is much smaller than that in the primary combustion chamber, the decrease in NOx concentration due to the rise in the temperature in the secondary combustion chamber is smaller than that in the primary combustion chamber. By calculating the estimation value of NOx concentration based on the temperature and the air ratio in the correlation region in the primary combustion chamber, the amount of supplied denitrification agent is suitably adjusted and thereby the amount of supplied denitrification agent is kept low.

In this case, it is preferable that the primary combustion chamber has a vertically extending shape and the inlet port has a square shape, and the control unit calculates an estimation value of concentration of NOx produced in the melting furnace based on temperature and air ratio in a space corresponding to the correlation region, the space extending from a position above a top end of the inlet port by 1.0 to 1.5 times a height of the inlet port to a position below a bottom end of the inlet port by 1.0 to 1.5 times the height of the inlet port, and controls an amount of the denitrification agent to be supplied by the denitrification agent supply unit based on the estimation value.

In such a manner, the accuracy of estimating NOx concentration can be reliably improved. Specifically, in the space near the inlet port, the gas flowing in from the gasification furnace contains a relatively large amount of nitrogen compounds. Measuring the temperature and the air ratio in the space improves the accuracy of estimating the NOx concentration.

Specifically, it is preferable that the melting furnace includes a cinder notch provided between the primary combustion chamber and the secondary combustion chamber and configured to eject molten slag resulting from melting the ash downward from between the primary combustion chamber and the secondary combustion chamber, and the secondary combustion chamber is disposed in a downstream of the cinder notch.

Furthermore, the method of treating NOx according to the above embodiment is a method of treating NOx in a waste treatment system for treating NOx contained in exhaust gas produced in the waste treatment system for treating waste, the method including: a melting step of burning combustible gas produced in a gasification furnace in a melting furnace to melt ash contained in the combustible gas; and a denitrification agent supplying step of supplying a denitrification agent for reducing NOx contained in exhaust gas produced in the melting step, wherein in the melting step, the ash is melted in the melting furnace including a primary combustion chamber having an inlet port, which allows the combustible gas to flow through, and configured to burn combustible gas flown in through the inlet port, and a secondary combustion chamber connected to a downstream of the primary combustion chamber and configured to further burn exhaust gas resulting from burning in the primary combustion chamber, and in the denitrification agent supplying step, an estimation value of concentration of NOx produced in the melting furnace is calculated based on temperature and air ratio in a correlation region at or near the inlet port of the primary combustion chamber, a correlation between temperature and NOx concentration in the correlation region being stronger than that in the secondary combustion chamber, and the denitrification agent is supplied to the exhaust gas by an amount adjusted based on the estimation value.

This method also has high accuracy in estimating concentration of NOx in the melting furnace and keeps consumption of the denitrification agent low.

**Claims**

1. A waste treatment system for treating waste, the system comprising:

   a melting furnace for burning combustible gas produced in a gasification furnace to melt ash contained in the combustible gas;
   a denitrification agent supply unit that supplies a denitrification agent for reducing NOx contained in exhaust gas resulting from burning the combustible gas; and
   a control unit that controls an amount of the denitrification agent to be supplied by the denitrification agent supply unit,
   wherein the melting furnace includes a primary combustion chamber having an inlet port, which allows the combustible gas to flow through, and configured to burn combustible gas flown in through the inlet port, and a secondary combustion chamber connected to a downstream of the primary combustion chamber and configured to further burn exhaust gas resulting from burning in the primary combustion chamber, and
   the control unit calculates an estimation value of concentration of NOx produced in the melting furnace based on temperature and air ratio in a correlation region at or near the inlet port of the primary combustion chamber, a correlation between temperature and NOx concentration in the correlation region being stronger than a correlation between temperature and NOx concentration in the secondary combustion chamber, and controls an amount of the denitrification agent to be supplied by the denitrification agent supply unit based on the estimation value.

2. The waste treatment system according to claim 1, wherein
   the primary combustion chamber has a vertically extending shape and the inlet port has a square shape, and

the control unit calculates an estimation value of concentration of NOx produced in the melting furnace based on temperature and air ratio in a space corresponding to the correlation region, the space extending from a position above a top end of the inlet port by 1.0 to 1.5 times a diameter of the inlet port to a position below a bottom end of the inlet port by 1.0 to 1.5 times the diameter of the inlet port, and controls an amount of the denitrification agent to be supplied by the denitrification agent supply unit based on the estimation value.

3. The waste treatment system according to claim 2, wherein
   the melting furnace includes a cinder notch provided between the primary combustion chamber and the secondary combustion chamber and configured to eject molten slag resulting from melting the ash downward from between the primary combustion chamber and the secondary combustion chamber, and
   the secondary combustion chamber is disposed in a downstream of the cinder notch.

4. A method of treating NOx in a waste treatment system for treating NOx contained in exhaust gas produced in the waste treatment system for treating waste, the method comprising:

   a melting step of burning combustible gas produced in a gasification furnace in a melting furnace to melt ash contained in the combustible gas; and
   a denitrification agent supplying step of supplying a denitrification agent for reducing NOx contained in exhaust gas produced in the melting step,
   wherein in the melting step, the ash is melted in the melting furnace including a primary combustion chamber having an inlet port, which allows the combustible gas to flow through, and configured to burn combustible gas flown in through the inlet port, and a secondary combustion chamber connected to a downstream of the primary combustion chamber and configured to further burn exhaust gas resulting from burning in the primary combustion chamber, and
   in the denitrification agent supplying step, an estimation value of concentration of NOx produced in the melting furnace is calculated based on temperature and air ratio in a correlation region at or near the inlet port of the primary combustion chamber, a correlation between temperature and NOx concentration in the correlation region being stronger than a correlation between temperature and NOx concentration in the secondary combustion chamber, and the denitrification agent is supplied to the exhaust gas by an amount adjusted based on the estimation value.

FIG.1

TEMPERATURE SENSOR — 410

NOx CONCENTRATION METER — 420

400
402
403
401

CHIMNEY — 800

DENITRIFICATION CATALYST DEVICE — 700

DENITRIFICATION AGENT SUPPLY UNIT — 300

BAG FILTER — 600

BOILER — 500

S — 200

220

230

211
213
212
210

GASIFICATION FURNACE — 100

WASTE

# FIG.2

# FIG.3

# FIG.4

# FIG.5

## INTERNATIONAL SEARCH REPORT

| International application No. |
| --- |
| PCT/JP2015/085507 |

**A. CLASSIFICATION OF SUBJECT MATTER**
*F23J7/00*(2006.01)i, *F23J1/00*(2006.01)i, *F23J15/00*(2006.01)i, *B01D53/56* (2006.01)i, *B01D53/86*(2006.01)i, *B09B3/00*(2006.01)i, *F23G5/24*(2006.01)i

According to International Patent Classification (IPC) or to both national classification and IPC

**B. FIELDS SEARCHED**

Minimum documentation searched (classification system followed by classification symbols)
F23J7/00, B01D53/56, B01D53/86, B09B3/00, F23G5/24, F23J1/00, F23J15/00

Documentation searched other than minimum documentation to the extent that such documents are included in the fields searched

Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2006-192406 A  (Kobelco Eco-Solutions Co., Ltd.), 27 July 2006 (27.07.2006), entire text; all drawings (Family: none) | 1-4 |
| A | JP 2014-31927 A  (Kobelco Eco-Solutions Co., Ltd.), 20 February 2014 (20.02.2014), entire text; all drawings (Family: none) | 1-4 |
| A | JP 2013-79788 A  (Kobelco Eco-Solutions Co., Ltd.), 02 May 2013 (02.05.2013), entire text; all drawings (Family: none) | 1-4 |

☒ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 02 March 2016 (02.03.16) | 15 March 2016 (15.03.16) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2015/085507 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-89041 A (IHI Corp.),<br>06 May 2011 (06.05.2011),<br>entire text; all drawings<br>& US 2012/0107208 A1 & WO 2011/048779 A1<br>& AU 2010309254 A1 & CN 102666809 A | 1-4 |
| A | JP 54-127046 A (Kubota Tekko Kabushiki Kaisha),<br>02 October 1979 (02.10.1979),<br>entire text; all drawings<br>(Family: none) | 1-4 |

Form PCT/ISA/210 (continuation of second sheet) (January 2015)

**REFERENCES CITED IN THE DESCRIPTION**

**Patent documents cited in the description**

- JP 2006192406 A